# EUROPÄISCHE PATENTSCHRIFT

(11) **EP 1 644 226 B1**
(45) Veröffentlichungstag und Bekanntmachung des Hinweises auf die Patenterteilung: **12.09.2007**
(21) Anmeldenummer: 04740847.1
(22) Anmeldetag: 09.07.2004
(51) Int. Cl.: B60R 22/34

(54) **VERFAHREN ZUR ANSTEUERUNG EINES REVERSIBLEN GURTSTRAFFERS IN EINEM KRAFTFAHRZEUG**
METHOD FOR CONTROLLING THE OPERATION OF A REVERSIBLE BELT RETRACTOR IN A MOTOR VEHICLE
PROCEDE POUR AMORCER LE FONCTIONNEMENT D'UN RETRACTEUR DE CEINTURE REVERSIBLE DANS UN VE HICULE AUTOMOBILE

(30) Priorität: 15.07.2003 DE 10332024
(43) Veröffentlichungstag der Anmeldung: 12.04.2006
(73) Patentinhaber: DaimlerChrysler AG, 70327 Stuttgart (DE)
(72) Erfinder: BOGENRIEDER, Ralf, 70565 Stuttgart (DE); EBERLE, Walter, 73269 Hochdorf (DE); JUSTEN, Rainer, 71155 Altdorf (DE); RÖHM, Hans, 72218 Wildberg (DE); VILLINO, Guido, 71229 Leonberg (DE); WAGNER, Alfred, 72810 Gomaringen (DE); WOLDRICH, Markus, 71254 Ditzingen (DE)
(86) Internationale Anmeldenummer: PCT/EP2004/007564
(87) Internationale Veröffentlichungsnummer: WO 2005/007467

(56) Entgegenhaltungen:
- WO-A-02/46005
- WO-A-02/47049
- DE-A- 10 005 010
- US-A1- 2003 114 973

## Beschreibung

Die Erfindung betrifft ein Verfahren zur Ansteuerung eines reversiblen Gurtstraffers zum Lösen einer Gurtauszugssperre eines Rückhaltegurts in einem Kraftfahrzeug nach dem Oberbegriff des Patentanspruchs 1.

Übliche Rückhaltegurtsysteme in Kraftfahrzeugen umfassen einen Aufwickelmechanismus zum automatischen Aufwickeln des losen Gurtbandes um eine Gurtspule. Durch das automatische Aufwickeln wird erreicht, dass der angelegte Gurt locker und komfortabel am Körper eines Insassen anliegt und bei Nichtgebrauch des Sicherheitsgurts um die Gurtspule aufgerollt ist (Komfortzustand). Das Abwickeln des Gurts im Komfortzustand ist bei angelegtem Gurt leicht möglich, um den Insassen weitgehende Bewegungsfreiheit zu verschaffen. Hierbei wird von einer Rückzugsfeder ein geringes Drehmoment entgegen der Abwickelrichtung erzeugt.

Insbesondere damit ein solches Gurtsystem einen Insassen im Falle einer Kollision zurückhalten kann, ist zusätzlich eine Gurtauszugssperre vorhanden. Diese verhindert ab einer vorgegebenen Beschleunigung der Gurtspule in Abwickelrichtung und/oder ab einer vorgegebenen Beschleunigung des Fahrzeugs das Abwickeln des Gurtbandes. Hierzu sind ein gurtbandsensitiver Sensor und ein fahrzeugsensitiver Sensor vorgesehen, welche in der Regel Bestandteil des Gurtsystems sind. Das Ansprechen eines dieser beiden Sensoren, beispielsweise des fahrzeugsensitiven Beschleunigungssensors aufgrund einer über einem Schwellwert liegenden Beschleunigung des Fahrzeugs verhindert ein Abwickeln des Gurtbandes. Beispiele für gurtbandsensitive Sensoren sind ein mit der Gurtspule gekoppelter mechanischer Fliehkraftsensor, ein elektromechanischer Fliehkraftsensor oder ein elektronischer Gurtauszugssensor, welcher die Auszugsgeschwindigkeit des Gurtbandes oder dessen Beschleunigung erfasst.

Bei manchen Rückhaltegurtsystemen ist zudem ein Gurtstraffer vorhanden, welcher angesteuert werden kann, um bei einem Unfall das lose Gurtband zu verkürzen und/oder einen Insassen zur Rückenlehne des Sitzes hin in eine Position mit verringerter Verletzungsgefahr zu ziehen.

In manchen Fahrzeugen werden zudem reversible Gurtstraffer eingesetzt, welche mehrmals, auch schnell hintereinander, ausgelöst werden können. Diese reversiblen Gurtstraffer können unterschiedliche Antriebe aufweisen. Beispielsweise kann ein reversibler Gurtstraffer durch einen Elektromotor angetrieben werden, welcher dauerhaft oder über eine Kupplung steuerbar auf die Gurtspule wirkt. Andere reversible Gurtstraffer werden mit Druckluft aus einem Druckspeicher, oder durch eine gespannte Feder angetrieben, wobei der Druckspeicher während des Fahrbetriebs wieder befüllbar und die Feder während des Fahrbetriebs wieder spannbar ist. Solche reversiblen Gurtstraffer ermöglichen eine Straffung des Sicherheitsgurts mit vorgebbarer Stärke, vorgebbarer Geschwindigkeit und vorgebbarer Zeitdauer. Insbesondere wird durch die mehrfache Auslösbarkeit des reversiblen Gurtstraffers ein vorbeugendes Auslösen desselben ermöglicht. Ein vorbeugendes Auslösen bedeutet, dass der Gurtstraffer in sicherheitskritischen Fahrsituationen ausgelöst wird, welche beispielsweise von Fahrdynamiksensoren oder Fahrzeugumgebungssensoren ermittelt werden, oder auf welche durch die Auswertung der Bremspedalbetätigung, des Lenkwinkels oder einer Fahrerbeobachtung geschlossen wird. Über ein vorbeugendes Auslösen hinaus kann ein reversibler Gurtstraffer auch zur haptischen Warnung des Fahrers in sicherheitskritischen Situationen eingesetzt werden.

Bei einer vorbeugenden Auslösung des Gurtstraffers, welche vor dem Erfassen einer Kollision stattfinden kann, oder bei einer Auslösung des Gurtstraffers zu Warnzwecken, ist es wünschenswert, dass der Gurt nach der erfolgten Straffung, nach Beendigung der Gefahrensituation und bei sichergestelltem Normalfahrbetrieb freigegeben wird und wieder locker und komfortabel am Insassen anliegt. Ein sichergestellter Normalfahrbetrieb liegt vor, wenn die Bewertung der Situation durch ein Steuergerät oder einen Gefahrenrechner nicht ergibt, dass eine sicherheitskritische Situation vorliegt, beziehungsweise wenn die für die Auslösung des Gurtstraffers notwendige Bedingung nicht mehr erfüllt ist. Eine solche Bedingung kann das Vorhandensein oder das Fehlen eines bestimmten Signals auf einem Datenbus oder einer Datenleitung sein.

Nach einer mittels eines Gurtstraffers durchgeführten Straffung des Sicherheitsgurts und einer anschließend mittels des Gefahrenrechners erkannten Beendigung der Gefahrensituation kann der Fall eintreten, dass aufgrund eines gurtbandsensitiven oder eines fahrzeugsensitiven Sensors, welche mit der Gurtauszugssperre zumeist mechanisch gekoppelt sind, ein gewünschter Gurtbandauszug und damit die Rückkehr in den Komfortzustand verhindert wird.

Ein gurtbandsensitiver Sensor kann insbesondere dann ansprechen, wenn nach einer Gurtstraffung ein Freigeben eines gestrafften Gurts erfolgt, während dieser unter einer Zugbelastung steht. Erfolgt das Abwickeln des Gurtbandes zu schnell, so spricht der gurtbandsensitive Sensor an und die Gurtauszugssperre wird zumeist mechanisch angesteuert und wirksam. Die Gurtauszugssperre wird auch dann wirksam, wenn der fahrzeugsensitive Beschleunigungssensor aufgrund der Fahrzeugbewegung anspricht, beispielsweise bei einem Brems- oder Lenkmanöver, bei einem starken Schwanken des Fahrzeugs oder bei einer schnellen Kurvenfahrt. Ist die Gurtauszugssperre wirksam, so ist es nicht mehr möglich das gestraffte Gurtband abzuwickeln und die Bewegungsfreiheit eines Insassen ist stark eingeschränkt. Der Sicherheitsgurt soll deshalb schnellstmöglich wieder in den Komfortzustand überführt werden. Dies gilt auch, falls nach einer reversiblen Gurtstraffung die Ursache für die Auslösung des Gurtstraffers nicht mehr vorhanden und ein Normalfahrbetrieb sichergestellt ist. Um das Gurtband wieder freizugeben, ist beispielsweise bei einer in Kraftfahrzeugen üblichen Blockiervorrichtung eine Sperrklinke von einer Blockierverzahnung zu lösen. Dies ist nur möglich, wenn weder der fahrzeugsensitive noch der gurtbandsensitive Sensor die Gurtauszugssperre aktivieren.

Ein Verfahren zur Ansteuerung eines Gurtstraffers mit einer Blockiervorrichtung ist in der WO 02/46005 beschrieben. Der Gurtstraffer wirkt hierbei unter anderem als Lösevorrichtung zum Lösen einer Gurtauszugssperre. Diese Gurtauszugssperre wirkt derart auf eine Gurtspule, dass im Blockierzustand der Gurtauszugssperre ein auf der Gurtspule aufgewickeltes Gurtband am Abwickeln gehindert wird, und nur im Komfortzustand das Abwickeln des Gurtbandes möglich ist. Die Gurtauszugssperre kann nur dann vom Blockierzustand in den Komfortzustand wechseln, wenn der fahrzeugsensitive Beschleunigungssensor keine über einem Beschleunigungsschwellwert liegende Beschleunigung erfasst. Nach einem Wirksamwerden der Gurtauszugssperre wird der Gurtstraffer in einem Lösezeitpunkt mit einem Lösesignal angesteuert, um den Wechsel der Gurtauszugssperre vom Blockierzustand in den Komfortzustand zu bewirken.

Aus der gattungsbildenden WO 02/47049 ist ein Verfahren zur Ansteuerung eines reversiblen Gurtstraffers zum Lösen einer Gurtauszugssperre eines Rückhaltegurts in einem Kraftfahrzeug bekannt. Nachdem die erfasste Gefahrensituation als beendet erkannt wurde, wird der Gurtstraffer in einem Lösezeitpunkt mit einem Lösesignal angesteuert, um das Lösen der Gurtauszugssperre vom Blockierzustand in den Komfortzustand zu bewirken. Zur Ermittlung des Lösezeitpunkts kann eine die Fahrdynamik kennzeichnende Größe erfasst und herangezogen werden.

US-A-2003/0114973 zeigt die Merkmale des Oberbegriffs des Anspruchs 1.

Aufgabe der Erfindung ist es, die Sicherheit, die Zuverlässigkeit und den Komfort eines Rückhaltegurtsystems mit einem reversiblen Gurtstraffer zu verbessern. Diese Aufgabe wird durch die Merkmale des Anspruchs 1 gelöst.

Wird ein reversibler Gurtstraffer in einem Kraftfahrzeug infolge einer erfassten Gefahrensituation ausgelöst, so wird ein Rückhaltegurt eines Gurtsystems gestrafft. Das Gurtsystem umfasst eine von einem Beschleunigungssensor aktivierbare Gurtauszugssperre, welche im aktivierten Zustand bewirkt, dass der Rückhaltegurt nicht von einer Gurtspule abgewickelt werden kann. Mittels eines auf einem Modell des Beschleunigungssensors basierenden Algorithmus wird basierend auf mindestens einer die Fahrdynamik kennzeichnenden Größe ein Lösezeitpunkt für das Lösen der Gurtauszugssperre von einem Blockierzustand in einen Komfortzustand ermittelt. Nachdem das Ende der Gefahrensituation ermittelt wird, wird der Gurtstraffer zu dem ermittelten Lösezeitpunkt mit einem Lösesignal angesteuert, um das freie Abwickeln des Gurtbandes zu ermöglichen und gegebenenfalls das Lösen der Gurtauszugssperre zu bewirken.

Vorteil der erfindungsgemäßen Lösung der Aufgabe ist es, dass mittels des auf einem Modell des Beschleunigungssensors basierenden Algorithmus in einfacher Weise eine zuverlässige Information über den tatsächlichen Zustand des Beschleunigungssensors zur Ermittlung des Lösezeitpunkts herangezogen wird. Mittels dieser zuverlässigen Information über den tatsächlichen Zustand des Beschleunigungssensors kann der Lösezeitpunkt so festgelegt werden, dass mit einer vorgebbaren hohen Wahrscheinlichkeit der Beschleunigungssensor nicht das Wirksamwerden der Gurtauszugssperre bewirkt, d.h. dass mit einer vorgebbar hohen Wahrscheinlichkeit im Anschluss an die Ansteuerung des reversiblen Gurtstraffers im Lösezeitpunkt das Gurtband zum Abwickeln freigegeben wird.

In einer alternativen Ausführungsform eines reversiblen Gurtsystems, umfasst das Gurtsystem zusätzlich zu der bereits erwähnten ersten Gurtauszugssperre eine zweite Gurtauszugssperre mit geringerer Haltekraft. Diese zweite Gurtauszugssperre dient zur Verhinderung eines einfachen Abwickelns des reversibel gestrafften Gurtbandes, z.B. bei einer willkürlichen Bewegung eines Insassen. Diese zweite Gurtauszugssperre ist jedoch nicht dazu geeignet, bei einem Unfall die auf das Gurtband wirkenden Kräfte aufzufangen und den Gurt zurückzuhalten. Die zweite Gurtauszugssperre kann beispielsweise in Form eines Schneckengetriebes als selbstsperrendes Getriebe ausgebildet sein. Diese zweite Gurtauszugssperre verhindert nach einer reversiblen Gurtstraffung, dass bei einem Fehlen zusätzlicher schwerwiegender Einflüsse, wie beispielsweise einer Kollision des Fahrzeugs, die erste, härtere Gurtauszugssperre mit hoher Haltekraft wirksam wird. Bei einem solchen Gurtsystem wird die zweite Gurtauszugssperre ebenfalls durch Ansteuerung des Gurtstraffers in dem ermittelten Lösezeitpunkt gelöst. Die Ansteuerung eines solchen Gurtstraffers erfolgt in der Gurtauszugssperre angepassten Weise, z.B. bei einer Gurtauszugssperre mit einem Schneckengetriebe so, dass das selbstsperrende Getriebe in Abwickelrichtung gedreht wird. Die erfindungsgemäße Ermittlung des Lösezeitpunkts ist jedoch dieselbe wie bei einem Gurtstraffer ohne eine solche zweite Gurtauszugssperre.

Der Löseimpuls dient allgemein zum Ansteuern eines Gurtsystems zum Lösen eines reversibel gestrafften Gurtes. Dies kann bei anderen nicht dargestellten Gurtsystemen in anderer als den dargestellten Weisen erfolgen, ist für die grundsätzlichen Vorteile der erfindungsgemäßen Ermittlung des Lösezeitpunkts jedoch unerheblich.

In einer Ausgestaltung des Verfahrens zur Ansteuerung eines reversiblen Gurtstraffers wird als Lösezeitpunkt nur ein Zeitpunkt ermittelt, bei dem sich mittels des Sensormodells ergibt, dass die vom Beschleunigungssensor erfasste Beschleunigung kleiner als ein vorgebbarer Beschleunigungsschwellwert ist. Hierdurch wird besonders zuverlässig verhindert, dass zum Lösezeitpunkt die Gurtauszugssperre aufgrund einer vom Beschleunigungssensor erfassten Beschleunigung wirksam ist.

In einer weiteren vorteilhaften Ausgestaltung wird als Lösezeitpunkt ein Zeitpunkt ermittelt, bei dem sich mittels des Sensormodells ergibt, dass die vom Beschleunigungssensor erfasste Beschleunigung für mindestens eine vorgebbare Zeitdauer einen vorgebbaren Beschleunigungsschwellwert unterschreitet oder bereits unterschritten hat. Hierdurch kann die Freigabe des Gurtbandes nach der Ansteuerung des Gurtstraffers zum Lösezeitpunkt mit noch größerer Zuverlässigkeit erreicht werden. Die vorgebbare Zeitdauer ist vorzugsweise eine Funktion der Änderung der Beschleunigung und vorzugsweise auch abhängig vom Fahrzeugmodell, der Beladung, der Bereifung oder von anderen die Fahrsituation beschreibenden Größen.

Der Beschleunigungssensor ist vorzugsweise ein mechanischer Sensor und das Sensormodell ein mathematisches Modell des mechanischen Sensors. Alternativ hierzu kann der Sensor auch ein elektromechanischer Sensor, ein elektronischer Sensor oder ein Sensoralgorithmus sein.

Zur Ermittlung des Lösezeitpunkts werden in einer Ausgestaltung der Erfindung die Querbeschleunigung, die Längsbeschleunigung, die Raddrehzahlen, die Giergeschwindigkeit oder die Gierbeschleunigung herangezogen. Insbesondere werden zwei oder mehr dieser Größen zur Ermittlung des Lösezeitpunkts herangezogen. Mittels diesen Größen kann eine Gesamtbeschleunigung des Fahrzeugs ermittelt werden. Falls der Beschleunigungssensor des Gurtsystems ein in der Fahrzeugebene isotrop wirkender Kugelsensor ist, d.h. keine Vorzugsrichtung in der Fahrezeugebene aufweist, wird insbesondere die Beschleunigung des Fahrzeugs in der Ebene ermittelt. Zusätzlich kann auch die Beschleunigung senkrecht zur Fahrzeugebene mit in die Ermittlung des Lösezeitpunkts eingehen.

In einer einfachen Ausgestaltung des Verfahrens zur Ansteuerung eines reversiblen Gurtstraffers wird als Lösezeitpunkt ein Zeitpunkt ermittelt, zu dem mehrere der Größen Querbeschleunigung, Giergeschwindigkeit, Gierbeschleunigung, Raddrehzahlen und Längsbeschleunigung einen für die jeweilige Größe vorgebbaren Schwellwert für eine vorgebbare Zeitdauer unterschreiten.

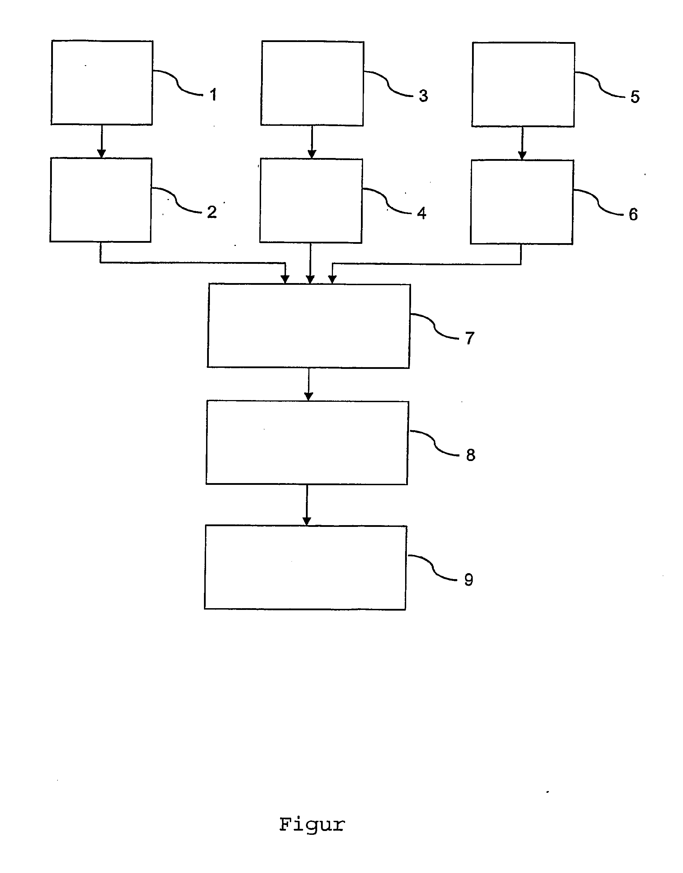

Die einzige Figur zeigt ein Ablaufdiagramm einer vorteilhaften Ausführungsform eines Verfahrens zur Ansteuerung eines reversiblen Gurtstraffers zum Lösen einer von einem Beschleunigungssensor aktivierbaren Gurtauszugssperre eines Rückhaltegurts. Die Ansteuerung erfolgt in einem Lösezeitpunkt, welcher unter Heranziehen von Raddrehzahlen, Querbeschleunigung und Gierbeschleunigung ermittelt wird. Alternativ oder ergänzend können auch andere Größen zur Ermittlung des Lösezeitpunkts herangezogen werden.

In Schritt 1 werden eine oder vorzugsweise mehrere Raddrehzahlen erfasst und aus den erfassten Raddrehzahlen wird die Längsbeschleunigung des Fahrzeugs ermittelt. Alternativ kann die Längsbeschleunigung auch auf andere Weise ermittelt oder mittels eines Sensors direkt erfasst werden. Die ermittelte Längsbeschleunigung wird zur Weiterverarbeitung in Schritt 2 bereit gestellt. In Schritt 2 wird abgefragt, ob die Längsbeschleunigung unter einem vorgebbaren Beschleunigungsschwellwert liegt.

In Schritt 3 wird die Drehbeschleunigung des Fahrzeugs um seine eigene Hochachse sensorisch erfasst oder mittels Hilfsgrößen ermittelt und zur Weiterverarbeitung in Schritt 4 bereit gestellt. In Schritt 4 kann zusätzlich abgefragt werden, ob die Giergeschwindigkeit, die Gierbeschleunigung oder eine diese beiden Größen berücksichtigende Hilfsgröße unter einem vorgebbaren Schwellwert liegt.

In Schritt 5 wird die Querbeschleunigung des Fahrzeugs erfasst oder mittels Hilfsgrößen ermittelt und zur Weiterverarbeitung in Schritt 6 bereit gestellt. In Schritt 6 wird abgefragt, ob die Querbeschleunigung unter einem vorgebbaren Schwellwert liegt.

Die Ergebnisse der Abfragen in den Schritten 2, 4 und 6 werden in Schritt 7 zusammengeführt. Es wird ein Zeitpunkt ermittelt, zu dem die überwachten Größen Längsbeschleunigung, Querbeschleunigung und Gierbeschleunigung unter den jeweils vorgebbaren Schwellwerten liegen. Dieser ermittelte Zeitpunkt wird als Lösezeitpunkt bestimmt.

In einer speziellen und besonders vorteilhaften Ausführungsform wird in Schritt 7 aus den überwachten Größen das Verhalten einer Kugel innerhalb eines Kugelsensors simuliert. Hierzu wird ein Modell des Kugelsensors in einem Algorithmus abgebildet und die überwachten Größen als Eingangsgrößen für das Modell verwendet.

Als ein Lösezeitpunkt kann basierend auf den in den Schritten 1, 3 und 5 ermittelten oder erfassten Größen sowohl der aktuelle Zeitpunkt, als auch ein in der Zukunft liegender Zeitpunkt ermittelt werden.

In Schritt 8 werden weitere Kriterien abgefragt, welche für eine Ansteuerung des Gurtstraffers zum Lösen einer Gurtauszugssperre erfüllt sein müssen. Beispielsweise wird vorgegeben, dass keine Gefahrensituation mehr vorliegt, d.h. dass die für das ursprüngliche Auslösen des Gurtstraffers ursächliche Gefahrensituation vorüber ist. Weiter wird überprüft, ob keine andere kritische Situation vorliegt, und nur falls eine solche nicht vorliegt wird in Schritt 9 der reversible Gurtstraffer in dem ermittelten Lösezeitpunkt oder innerhalb eines vorgebbaren Zeitraums nach dem ermittelten Lösezeitpunkt angesteuert, um die Gurtauszugssperre zu lösen und somit das Gurtsystem vom Blockierzustand in den Komfortzustand zu versetzen. In einer alternativen Ausgestaltung können die in Schritt 8 durchgeführten Abfragen auch zu einem anderen Zeitpunkt, beispielsweise bereits vor Schritt 1 erfolgen.

## Patentansprüche

1. Verfahren zur Ansteuerung eines reversiblen Gurtstraffers zum Lösen einer von einem Beschleunigungssensor aktivierbaren Gurtauszugssperre eines Rückhaltegurts in einem Kraftfahrzeug, wobei nach einem Auslösen des Gurtstraffers infolge einer erfassten Gefahrensituation und nachdem die Gefahrensituation als beendet erkannt wurde, der Gurtstraffer in einem Lösezeitpunkt mit einem Lösesignal angesteuert wird, um das Lösen der Gurtauszugssperre von einem Blockierzustand in einen Komfortzustand zu bewirken,
**dadurch gekennzeichnet,**
**dass** mittels eines auf einem Modell des Beschleunigungssensors basierenden Sensormodell-Algorithmus und unter Heranziehen mindestens einer die Fahrdynamik kennzeichnenden Größe ein Lösezeitpunkt bestimmt wird, bei dem die Gurtauszugssperre nicht wirksam ist, und in diesem Löszeitpunkt der Gurtstraffer mit dem Lösesignal angesteuert wird.

2. Verfahren nach Anspruch 1,
**dadurch gekennzeichnet,**
**dass** als Lösezeitpunkt ein Zeitpunkt ermittelt wird, für den sich mittels des Sensormodell-Algorithmus ergibt,
**dass** die vom Beschleunigungssensor erfasste Beschleunigung kleiner als ein vorgebbarer Beschleunigungsschwellwert ist.

3. Verfahren nach Anspruch 2,
**dadurch gekennzeichnet,**
**dass** als Lösezeitpunkt ein Zeitpunkt ermittelt wird, für den sich mittels des Sensormodells ergibt, dass die vom Beschleunigungssensor erfasste Beschleunigung für mindestens eine vorgebbare Zeitdauer einen vorgebbaren Beschleunigungsschwellwert unterschritten hat.

4. Verfahren nach einem der Ansprüche 1 bis 3,
**dadurch gekennzeichnet,**
**dass** der Beschleunigungssensor ein mechanischer Sensor und das Sensormodell ein mathematisches Modell des mechanischen Sensors ist.

5. Verfahren nach einem der Ansprüche 1 bis 4,
**dadurch gekennzeichnet,**
**dass** zur Ermittlung des Lösezeitpunkts die Querbeschleunigung, die Raddrehzahlen oder die Gierbeschleunigung des Fahrzeugs herangezogen werden.

6. Verfahren nach Anspruch 5,
**dadurch gekennzeichnet,**
**dass** zur Ermittlung des Lösezeitpunkts die Querbeschleunigung und die Raddrehzahlen und die Gierbeschleunigung des Fahrzeugs herangezogen werden.

## Claims

1. Method for controlling the operation of a reversible belt retractor to release a belt extraction lock of a restraint belt in a motor vehicle, which lock can be activated by an acceleration sensor, wherein, after the belt retractor has been triggered as a consequence of a hazardous situation having been detected and after the hazardous situation has been recognized as being over, the operation of the belt retractor is controlled by a release signal at a release time in order to bring about the release of the belt extraction lock to shift it from a blocking state into a comfort-providing state, **characterized in that** by means of a sensor model algorithm based on a model of the acceleration sensor and with at least one variable characterizing the running dynamics being used, a release time is determined, in which the belt extraction lock is not effective, and the operation of the belt retractor is controlled by the release signal at this release time.

2. Method according to Claim 1, **characterized in that** the release time is determined as being a time at which the sensor model algorithm reveals that the acceleration detected by the acceleration sensor is smaller than a specifiable acceleration threshold value.

3. Method according to Claim 2, **characterized in that** the release time is determined as being a time at which the sensor model reveals that the acceleration detected by the acceleration sensor has dropped below a specifiable acceleration threshold value for at least a specifiable period of time.

4. Method according to one of Claims 1 to 3, **characterized in that** the acceleration sensor is a mechanical sensor and the sensor model is a mathematical model of the mechanical sensor.

5. Method according to one of Claims 1 to 4, **characterized in that** in order to determine the release time, use is made of the transverse acceleration, the wheel speeds or the yaw acceleration of the vehicle.

6. Method according to Claim 5, **characterized in that** in order to determine the release time, use is made of the transverse acceleration and the wheel speeds and the yaw acceleration of the vehicle.

## Revendications

1. Procédé de commande d'un rétracteur de ceinture réversible pour desserrer un bloqueur de déroulement de ceinture, apte à être activé par un capteur d'accélération, pour une ceinture de sécurité dans un véhicule automobile, sachant qu'après un déclenchement du rétracteur de ceinture à la suite de la détection d'une situation de danger et après que la fin de situation de danger ait été détectée, le rétracteur de ceinture est activé à un instant de déblocage par un signal de déblocage pour induire le desserrage du bloqueur de déroulement de ceinture à partir d'un état de blocage vers un état de confort, **caractérisé en ce qu'**au moyen d'un algorithme de modèle de détection, basé sur un modèle du capteur d'accélération, et en tenant compte d'au moins une grandeur caractérisant la dynamique de déplacement du véhicule, il est déterminé un instant de déblocage, à partir duquel le bloqueur de déroulement de ceinture n'est pas actif, et le rétracteur de ceinture est commandé à cet instant de déblocage par le signal de déblocage.

2. Procédé selon la revendication 1, **caractérisé en ce que** pour l'instant de déblocage, il est déterminé un instant auquel il est défini, au moyen d'un algorithme du modèle de détection, que l'accélération détectée par le capteur d'accélération est inférieure à une valeur seuil d'accélération prédéfinissable.

3. Procédé selon la revendication 2, **caractérisé en ce que** pour l'instant de déblocage, il est déterminé un instant auquel il est défini, au moyen du modèle de détection, que l'accélération détectée par le capteur d'accélération est inférieure au moins pendant une durée prédéfinissable à une valeur seuil d'accélération prédéfinissable.

4. Procédé selon l'une quelconque des revendications 1 à 3, **caractérisé en ce que** le capteur d'accélération est un capteur mécanique et le modèle de détection est un modèle mathématique du capteur mécanique.

5. Processus selon l'une quelconque des revendications 1 à 4, **caractérisé en ce que** la détermination de l'instant de déblocage tient compte de l'accélération transversale, des vitesses de rotation des roues ou de l'accélération de lacet du véhicule.

6. Procédé selon la revendication 5, **caractérisé en ce que** la détermination de l'instant de déblocage tient compte de l'accélération transversale et des vitesses de rotation des roues et de l'accélération de lacet du véhicule.
